# EUROPEAN PATENT SPECIFICATION

(11) **EP 2 022 117 B1**
(45) Date of publication and mention of the grant of the patent: **02.05.2012**
(21) Application number: 07735835.6
(22) Date of filing: 09.05.2007
(51) Int. Cl.: H01M 4/42, C22C 1/04, B22F 9/10

(54) **BATTERY ANODES**
BATTERIEANODEN
ANODES DE PILE

(30) Priority: 09.05.2006 US 798971 P
(43) Date of publication of application: 11.02.2009
(73) Proprietor: The Gillette Company, Boston, MA 02199 (US)
(72) Inventor: ZURAW, Michael, J., Bethel, Connecticut 06801 (US)
(74) Representative: Mather, Peter Geoffrey
(86) International application number: PCT/IB2007/051756
(87) International publication number: WO 2007/129285

(56) References cited:
- EP-A- 1 356 881
- WO-A-00/48260
- WO-A-94/19502
- WO-A-96/06196
- WO-A2-2004/012886
- JP-A- 2001 273 893
- JP-A- 2001 283 842

## Description

### TECHNICAL FIELD

the invention relates to Batteries, and to related components and methods.

### BACKGROUND

Batteries, such as alkaline batteries, are commonly used as electrical energy sources. Generally, a battery contains a negative electrode (anode) and a positive electrode (cathode). The anode contains an active material (e.g., zinc particles) that can be oxidized; and the cathode contains an active material (e.g., manganese dioxide) that can be reduced. The active material of the anode is capable of reducing the active material of the cathode. In order to prevent direct reaction of the active material of the anode and the active material of the cathode, the electrodes are electrically isolated from each other by a separator.

When a battery is used as an electrical energy source in a device, such as a cellular telephone, electrical contact is made to the electrodes, allowing electrons to flow through the device and permitting the respective oxidation and reduction reactions to occur to provide electrical power. An electrolyte in contact with the electrodes contains ions that flow through the separator between the electrodes to maintain charge balance throughout the battery during discharge.

Batteries can comprise an anode containing zinc alloy particles, where the zinc alloy includes an amount of indium, an amount of bismuth, and an amount of aluminium.

Japanese patent application 2001/273893 exemplifies zinc alloy particles comprising 0.05% (500 ppm) indium and from 0.004% to 0.012% (40 to 120ppm) bismuth. Some zinc particles additionally comprise 0.003% (30ppm) aluminium.

Further examples of such batteries and/or anode material are provided by international patent applications WO00/48260, WO94/19502, WO96/06196, and WO2004/012886, by Japanese patent application 2001/283842, and by EP-A-1,356,881.

### SUMMARY

The invention relates to an anode gel comprising 60% to 75% by weight of zinc alloy particles, one or more gelling agents and minor amounts of additives, wherein the alloy particles comprise from 30ppm to 150 ppm indium, from 30 ppm to 150 ppm bismuth, and from 5 ppm to 25 ppm aluminium.

In another aspect, the invention features a battery including a housing, an anode disposed within the housing, a cathode disposed within the housing, and a separator between the anode and the cathode. The anode comprises an anode gel as defined above.

In an additional aspect, the invention features a method including centrifugally atomizing a molten alloy to provide particles. The molten alloy includes zinc and from 30ppm to 150 ppm indium, from 30 ppm to 150 ppm bismuth, and from 5 ppm to 25 ppm aluminum.

Embodiments can include one or more of the following features.

The alloy can include from 15 ppm to 25 ppm (e.g., from 18 ppm to 22 ppm) aluminum. The alloy can include from 60 ppm to 80 ppm (e.g., from 65 ppm to 75 ppm) indium. The alloy can include from 75 ppm to 95 ppm (e.g., from 80 ppm to 90 ppm) bismuth. In some embodiments, the alloy can include 20 ppm aluminum, 70 ppm indium, and/or 85 ppm bismuth.

In certain embodiments, the alloy can include calcium. In some embodiments, the alloy can be substantially free of mercury, lead, iron, cadmium, and/or thallium. In certain embodiments, the alloy can include non-amalgamated zinc. In some embodiments, the alloy can be substantially free of amalgamated zinc.

In certain embodiments, some or all of the particles can include an alloy consisting essentially of zinc and from 30 ppm to 150 ppm indium, from 30 ppm to 150 ppm bismuth, and from 5 ppm to 25 ppm aluminum.

Some or all of the particles can be produced by centrifugal atomization. Some or all of the particles can have a dimension (e.g., a diameter) of at least 40 microns (1 micron = 1 µm) (e.g., at least 45 microns, at least 80 microns, at least 400 microns) and/or at most 900 microns (e.g., at most 400 microns, at most 80 microns, at most 45 microns).

At least 30% by weight (e.g., at least 40% by weight, at least 50% by weight, at least 60% by weight, at least 70% by weight, at least 80% by weight, at least 90% by weight, at least 95% by weight) of the particles can be spherical. Each spherical particle can have an aspect ratio of from 1.0 to 2.0, where the aspect ratio is equal to the ratio of the longest axis of the particle to the mean perpendicular bisector of the longest axis.

The cathode can include MnO₂.

The electrolyte can be alkaline.

The molten alloy can be centrifugally atomized in an atmosphere including oxygen. In certain embodiments, the molten alloy can be centrifugally atomized in an atmosphere including at most 1.2% (e.g., at most 1%, at most 0.9%, at most 0.7%, at most 0.5%, al most 0.3%, at most 0.1%) oxygen.

The method can include incorporating the particles into an anode.

Embodiments can include one or more of the following advantages.

In some embodiments, a battery that includes the alloy (e.g., in an anode) can be a relatively safe and/or reliable power source. For example, the battery can exhibit a relatively low amount of gassing and/or can be relatively unlikely to leak one or more of its contents (e.g., its electrolyte). In certain embodiments, the alloy can be relatively unlikely to halve an adverse effect on the environment.

In some embodiments, a battery that includes the alloy (e.g., in an anode) can exhibit relatively good electrochemical performance (e.g., discharge performance). In certain embodiments, a battery that includes the alloy can exhibit both relatively good electrochemical performance and relatively low gassing.

In some embodiments, particles that include the alloy can be more easily formed (e.g., using centrifugal atomization) than particles that do not include the alloy. For example, in certain embodiments in which the alloy includes a relatively low amount (e.g., at most 25 ppm) of aluminum, the amount of oxygen that can come into contact with the alloy during a centrifugal atomization process can be higher than for an alloy including a relatively high amount of aluminum. In some embodiments in which the alloy includes a relatively low amount of aluminum, a relatively small amount of the alloy can be used to make particles, compared to an alloy including a relatively high amount of aluminum.

In certain embodiments, the alloy can be relatively inexpensive to form (e.g., compared to an alloy that includes a higher amount of indium). In some embodiments, a battery that includes the alloy can be relatively inexpensive to assemble, and/or can exhibit comparable or enhanced electrochemical performance relative to a battery that does not include the alloy.

In certain embodiments, particles including the alloy can be used in a battery that also includes a relatively thin separator (e.g., having a thickness of at most 40 microns). A battery that includes the particles and a relatively thin separator can, for example, be less likely to experience electrical shorting than a battery that includes a relatively thin separator but that does not include the particles. A relatively thin separator can provide additional space in a battery housing for other battery components.

Other aspects, features, and advantages of the invention are in the description, drawings, and claims.

### DESCRIPTION OF DRAWINGS

FIG. 1 is a cross-sectional view of an embodiment of a battery.
FIG. 2 is a schematic of a centrifugal atomization apparatus.

### DETAILED DESCRIPTION

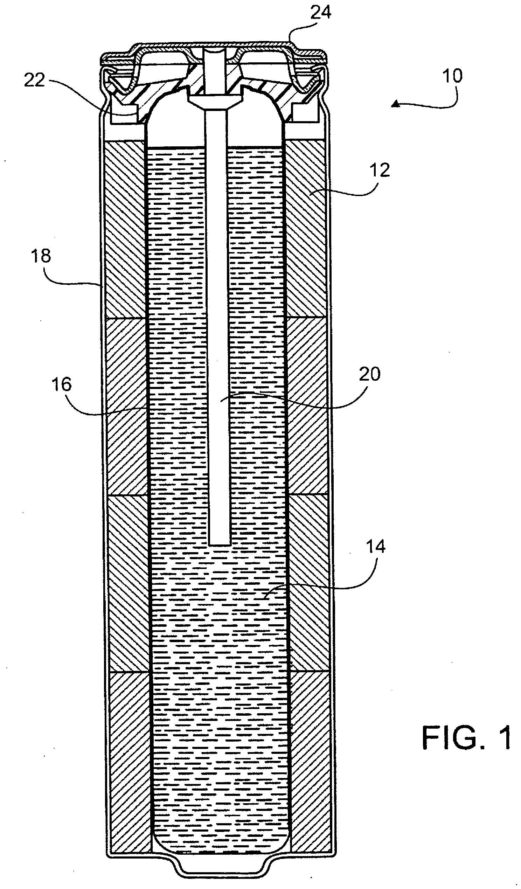

Referring to FIG. 1, a battery or electrochemical cell 10 has a cylindrical housing 18 containing a cathode 12, an anode 14, a separator 16 between cathode 12 and anode 14, and a current collector 20. Cathode 12 includes a cathode active material, and anode 14 includes an anode active material. Battery 10 also includes a seal 22 and a metal top cap 24, which, among with current collector 20, serve as the negative terminal for the battery. Cathode 12 is in contact with housing 18, and the positive terminal of battery 10 is at the end of the battery opposite from the negative terminal. An electrolyte is dispersed throughout battery 10.

Anode 14 includes at least one zinc alloy. The zinc alloy includes zinc (Zn) and at least one of the following elements: indium (In), bismuth (Bi), aluminum (Al), calcium (Ca), lead (Pb), gallium (Ga), lithium (Li), magnesium (Mg), and tin (Sn). In some embodiments, the zinc alloy can include iron (Fe). The iron can, for example, be present as an impurity in the zinc.

In some embodiments, the zinc alloy can include at least 30 ppm (e.g., at least 50 ppm, at least 70 ppm, at least 90 ppm, at least 110 ppm, at least 130 ppm, at least 150 ppm, at least 250 ppm, at least 500 ppm, at least 750 ppm), and/or at most 1000 ppm (e.g., at most 750 ppm, at most 500 ppm, at most 250 ppm, at most 150 ppm, at most 130 ppm, at most 110 ppm, at most 90 ppm, at most 70 ppm, at most 50 ppm) indium. For example, in certain embodiments, the zinc alloy can include from 30 ppm to 150 ppm (e.g., from 60 ppm to 80 ppm, 70 ppm) indium. Without wishing to be bound by theory, it is believed that indium can reduce the gassing potential of impurities (e.g., iron, arsenic, molybdenum) that can be present in zinc.

In some embodiments, the zinc alloy can include at least 30 ppm (e.g., at least 50 ppm, at least 70 ppm, at least 90 ppm, at least 110 ppm, at least 130 ppm, at least 150 ppm, at least 200 ppm, at least 300 ppm, at least 400 ppm), and/or at most 500 ppm (e.g., at most 400 ppm, at most 300 ppm, at most 200 ppm, at most 150 ppm, at most 130 ppm, at most 110 ppm, at most 90 ppm, at most 70 ppm, at most 50 ppm) bismuth. For example, in certain embodiments, the zinc alloy can include from 30 ppm to 150 ppm (e.g., from 75 ppm to 95 ppm, 85 ppm) bismuth. Without wishing to be bound by theory, it is believed that bismuth can reduce the amount of gassing that can occur during partial discharge or a battery such as battery 10.

In some embodiments, the zinc alloy can include at least 5 ppm (e.g., at least 10 ppm, at least 15 ppm, at least 20 ppm), and/or at most 25 ppm (e.g., at most 20 ppm, at most 15 ppm, at most 10 ppm) aluminum. For example, in certain embodiments, the zinc alloy can include from 5 ppm to 25 ppm (e.g., from 15 ppm to 25 ppm, from 18 ppm to 22 ppm, 20 ppm) aluminum. Without wishing to be bound by theory, it is believed that aluminum can form a protective aluminum oxide coating on zinc that can limit gassing by the zinc.

In some embodiments, the zinc alloy can include zinc, indium, bismuth, and aluminum. For example, in certain embodiments, the zinc alloy can include zinc and from 30 ppm to 150 ppm indium, from 30 ppm to 150 ppm bismuth, and from 5 ppm to 25 ppm aluminum, In some embodiment, the zinc alloy can include 20 ppm aluminum, 70 ppm indium, and/or 85 ppm bismuth.

In certain embodiments, the zinc alloy can include at least 50 ppm (e.g., at least 70 ppm, at least 90 ppm) and/or at most 100 ppm (e.g., at most 90 ppm, at most 70 ppm) calcium. As the amount of calcium in the zinc alloy increases, particles, formed from the zinc alloy can become smoother and/or more spherical.

In some embodiments, the zinc alloy can include less than 50 ppm (e.g., less than 40 ppm, less than 30 ppm, less than 20 ppm, less than 10 ppm) lead.

In certain embodiments, the zinc alloy can be substantially free of mercury. For example, the zinc alloy can include at most 1 ppm mercury (e.g., at most 0.5 ppm mercury). In some embodiments, the zinc alloy can include non-amalgamated zinc.

In some embodiments, the zinc alloy can be substantially free of lead, For example, the alloy can include at most 30 ppm lead (e.g.. at most 20 ppm read, at most 10 ppm lead, at most 5 ppm lead).

In certain embodiments, the zinc alloy can be substantially free of iron, cadmium, and/or thallium. For example, the zinc alloy can include at most 5 ppm (e.g., less than 4 ppm) iron, at most 10 ppm cadmium (e.g., at most 5 ppm cadmium), and/or at most 1 ppm thallium (e.g., at most 0.5 ppm thallium).

In some embodiment, the zinc alloy can be in the form of particles. For example, in certain embodiments, anode 14 can be a gel that includes zinc alloy particles, one or more belling agents, and/or minor amount of additives, such as one or more gassing inhibitors that are different from the zinc alloy particles. Examples of gelling agents include Carbopol^{®} C940 (from Noveon, Inc.) and Waterlock^{®} A221 (from Grain Processing Corp.). In some embodiments, a portion of the electrolyte can be dispersed throughout anode 14.

Anode 14 can include, for example, at least 60 percent by weight (e.g., at least 65 percent by weight, at least 68 percent by weight, at least 70 percent by weight, at least 72 percent by weight) and/or at most 75 percent by weight (e.g., at most 72 percent by weight, at most 70 percent by weight, at most 68 percent by weight, at most 65 percent by weight) zinc alloy particles.

In certain embodiments, anode 14 can include at least two (e.g., three, four, five) different types of zinc alloy particles.

In some embodiments, some or all of the zinc alloy particles can have a dimension (e.g., a diameter) of at least 40 microns (e.g., at least 45 microns, at least 70 microns, at least 80 microns, at least 100 microns, at least 200 microns, at least 300 microns, at least 400 microns, at least 500 microns, at least 600 microns, at least 700 microns, at least 800 microns) and/or at most 900 microns (e.g., at most 800 microns, at most 700 microns, at most 600 microns, at most 500 microns, at most 400 microns, at most 300 microns, at most 200 microns, at most 100 microns, at most 80 microns, at most 70 microns, at most 45 microns). For example, in certain embodiments, some or all of the zinc alloy particles can have a dimension of from 120 microns to 180 microns.

In certain embodiments, the zinc alloy particles can have a D₅₀ particle size of at least 80 microns (e.g., at least 100 microns, at least 200 microns, at least 300 microns) and/or at most 400 microns (e.g., at most 300 microns, at most 200 microns, at most 100 microns) using Low Angle Laser Light Scattering analysis (LALS).

In some embodiments, some or all of the zinc alloy particles in anode 14 can be spherical. In certain embodiments, at least 30% by weight (e.g., at least 40% by weight, at least 50% by weight, at least 60% by weight, at least 70% by wight, at least 80% by weight, at least 90% by weight, at least 95% by weight) of the zinc alloy particles in anode 14 can he spherical. Spherical as used herein means that the zinc alloy particles have an aspect ratio of from 1.0 to 2.0 or from 1.0 to 1.5 (e.g., from 1.0 to 1.25). The aspect ratio of the zinc alloy particles can be determined by two methods. According to the first method, the aspect ratio of a zinc alloy particle is equal to the reciprocal of its elongation ratio (i.e., 1/(elongation ratio)), where the elongation ratio is the smallest of the ratios between a measured diameter of the zinc alloy particle and its perpendicular diameter. According to the second method, the aspect ratio of a zinc alloy particle is equal to the ratio of the longest axis of the zinc alloy particle to the mean perpendicular bisector of the longest axis. This measurement can be made using a two-dimensional image of the zinc alloy panicle.

In some embodiments in which anode 14 includes spherical zinc alloy particles, some or all of the spherical zinc alloy particles can have a mean particle size of from 100 microns to 300 microns (measured by Sympatec Low Angle Laser Light Scattering analysis) and σ of from 1.4 to 1.8. In certain embodiments, some or all of the spherical zinc alloy particles can have an average surface area of from 50 cm²/gram to 250 cm²/gram (e.g., from 100 cm²/gram to 150 cm²/gram). The average surface area of the spherical zinc alloy particles can be measured by B.E.T. analysis.

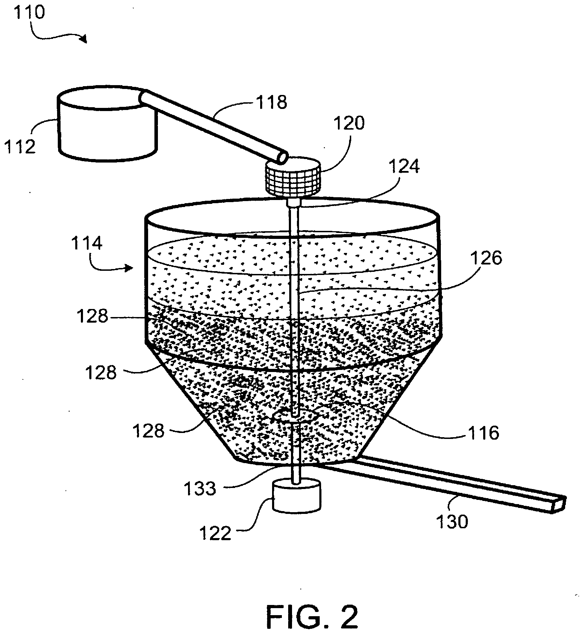

In certain embodiments, some or all of the zinc alloy particles (e.g., spherical zinc alloy particles) in anode 14 can be produced by centrifugal atomization. FIG. 2 shows a centrifugal atomization apparatus 110 including a furnace 112 and an atomization chamber 114. Atomization chamber 114 is maintained in a low oxygen atmosphere. In certain embodiments, atomization chamber 114 can be maintained in an atmosphere including at most 1.2% oxygen (e.g., at most 1% oxygen, at most 0.9% oxygen, at most 0.7% oxygen, at most 0.5% oxygen, at most 0.3% oxygen, at most 0.1% oxygen). In some embodiments, atomization chamber 114 can be maintained in an atmosphere including from 0.001% to 1.2% oxygen (e.g., from 1% to 1.2% oxygen). The balance of the gas in chamber 114 can be one or more inert gases (e.g., argon, helium, nitrogen). For example, the chamber may contain from 0.01% to 0.5% oxygen, with the balance of the gas being nitrogen.

A cup 116 is disposed within atomization chamber 114. Cup 116 can be made of, for example, graphite, and/or can have a diameter of from 5 cm to 50 cm (e.g., from 10 cm to 20 cm, 16.5 cm), In some embodiments, cup 116 can have a depth of from 0.1 cm to 10 cm (e.g., from 2 cm to 3 cm). A motor 122 (e.g., a 7.5 hp motor) is connected to a shaft 133, which is further connected to cup 116. A launder 118 connects furnace 112 to a tundish 120, which is located above atomization chamber 114.

Although not shown, centrifugal atomization apparatus 110 can include other components, such as a pulley system disposed between motor 122 and cup 116.

In operation, motor 122 drives cup 116, causing the cup to rotate. The cup can rotate at a rotational velocity of from 500 rpm to 50,000 rpm (e.g., from 6000 rpm to 8500 rpm). In some embodiments, the cup can rotate at a rotational velocity of 5300 rpm.

Zinc and alloying components are fed into furnace 112, in which the zinc and alloying components are then melted. The molten alloy can include from 1 ppm to 5,000 ppm (based on molten metal mass) of the alloying components (e.g., aluminum, indium, bismuth, calcium, gallium, lithium, magnesium, lead, tin, or combinations thereof). In some embodiments, the alloying components can be bismuth, indium, and aluminum. In certain embodiments, the molten alloy can include up to 500 ppm bismuth, up to 1000 ppm indium, and up to 200 ppm aluminum. In some embodiments, the molten alloy can be substantially free of bismuth, indium, and/or aluminum.

Once a sufficient amount of the resulting molten alloy has collected in furnace, the molten alloy travels down launder 118 and into tundish 120. Tundish 120 has an orifice 124. When the molten alloy travels through orifice 124, it forms a stream 126, which eventually makes contact with cup 116. Orifice 124 can be sized to allow for the desired melt flow rate (i.e., the flow rate of stream 126). The molten metal has a melt flow rate of from 10 pounds of zinc per hour to 20,000 pounds of zinc per hour (e.g., from 4,000 pounds of zinc per hour to 7,000 pounds of zinc per hour; 2,450 pounds of zinc per hour; 3,100 pounds of zinc per hour).

When stream 126 contacts cup 116, centrifugal force causes the molten alloy to spread out across cup 116 and then break free of the cup in droplets which subsequently cool and solidify, forming zinc particles 128. A percentage of the resulting zinc particles can be spherical. Once zinc particles 128 have been formed, they can, for example, be transported to a sieving operation (e.g., including a 60 mesh screen) by a transport means 130.

Centrifugal atomization and zinc alloy particles are described, for example, in Costanzo et al., U.S. Patent Application Publication No. US 2004/0258995 A1, published on December 23, 2004, and entitled "Anode for Battery".

As described above, in some embodiments, anode 14 can include one or more gelling agents and/or one or more gassing inhibitors.

Examples of gelling agents include polyacrylic acids, grafted starch materials, salts of polyacrylic acids, polyacrylates, carboxymethylcellulose, and combinations thereof. Examples of polyacrylic acids include Carbopol 940 and 934 (available from Noveon Inc.) and Polygel 4P (available from 3V). An example of a grafted starch material is Waterlock A22 (available from Grain Processing Corporation, Muscatine, 1A). An example of a salt of a polyacrylic acid is Alcosorb G1 (available from Ciba Specialties). Anode 14 can include, for example, at least 0.1 % by weight (e.g., at least 0.5% by weight) and/or at most 1% by weight (e.g., at most 0.5% by weight) gelling agent.

Gassing inhibitors can be inorganic material, such as bismuth, tin, lead and indium. Alternatively, gassing inhibitors can be organic compounds, such as phosphate esters, ionic surfactants or nonionic surfactants. Examples of ionic surfactants are disclosed, for example, in Chalilpoyil et al., U.S. Patent No. 4,777,100. An example of a commercially available surfactant is RM510, an organic phosphate ester from Rhone Poulene. In some embodiments, an anode can include 30 ppm RM510. In certain embodimemts, an anode can include 50 ppm RM510.

In some embodiments, an anode can include indium trichloride (e.g., 150 ppm indium trichloride).

Cathode 12 includes at least one (e.g., two, three) cathode active material. In some embodiments, cathode 12 can further include at least one conductive aid and/or at least one binder. The electrolyte also is dispersed through cathode 12. The weight percentages provided herein with respect to components of cathode 12 are determined after the electrolyte has been dispersed trough cathode 12.

In some embodiments, the cathode active material can be a manganese oxide, such as manganese dioxide (MnO₂). The manganese dioxide can be electrolytically-synthesized MnO₂ (EMD), chemically-synthesized MnO₂ (CMD), or a blend of EMD and CMD. Distributors of manganese dioxides include Kerr-McGee Corp. (manufacturer of, e.g., Trona D and high-power EMD), Tosoh Corp., Delta Manganese, Delta EMD Ltd., Mitsui Chemicals, ERACHEM, and JMC. In certain embodiments, cathode 12 can include from 80% to 88% by weight (e.g., from 82% to 86% by weight) manganese dioxide (e.g., HMD).

Other examples of cathode active materials include copper oxides (e.g., cupric oxide (CuO), cuprous oxide (Cu₂O)); copper hydroxides (e.g., cupric hydroxide (Cu(OH)₂), cuprous hydroxide (Cu(OH))); cupric iodate (Cu(IO₃)₂); AgCuO₂; LiCuO₂; Cu(OH)(IO₃); Cu₂H(IO₆); copper-containing metal oxides or chalcogenides; copper halides (e.g., CuCl₂); and/or copper manganese oxides (e.g., Cu(MnO₄)₂). The copper oxides can be stoichiometric (e.g., CuO) or non-stoichiometric (e.g., CuOₓ, where 0.5 ≤ x ≤ 1.5). Another example of a cathode active material is Cu₆InO₈Cl.

Further examples of cathode active materials include cathode active materials that include nickel, such as a nickel oxyhydroxide (NiOOH). The nickel oxyhydroxide can include, for example, a beta-nickel oxyhydroxide, a cobalt oxyhydroxide-coated beta-nickel oxyhydroxide, a gamma-nickel oxyhydroxide, a cobalt oxyhydroxide-coated gamma-nickel, oxyhydroxide, a solid solution of a beta-nickel oxyhydroxide and a gamma-nickel oxyhydroxide, or a cobalt oxyhydroxidc-coated solid solution of a beta-nickel oxyhydroxide and a gamma-nickel oxyhydroxide.

Additional examples of cathode active material include cathode active materials including a pentavalent bismuth-containing metal oxide.

It certain embodiments, cathode 12 can be porous. A porous cathode can include, for example, one or more of the above-described cathode active materials (e.g., EMD, NiOOH).

The conductive aid can increase the electronic conductivity of cathode 12. An example of a conductive aid is carbon particles. The carbon particles can be any of the conventional carbon particles used in cathodes. The carbon particles can be, for example, graphite particles. Graphite particles that are used in cathode 12 can be any of the graphite particles used in cathodes. The particles can be synthetic, non-synthetic, or a blend of synthetic and non-synthetic, and they can be expanded or non-expanded. In certain embodiments, the graphite particles are non-synthetic, non-expanded graphite particles. In such embodiments, the graphite particles can have an average particle size of less than 20 microns (e.g., from 2 microns to 12 microns, from 5 microns to 9 microns), as measured using a Sympatec HELOS Particle Size Analyzer. Graphite particles can be obtained from, for example, Brazilian Nacional de Grafite (Itapecinca, MG Brazil (MP-0702X)) or Chuetsu Graphite Works, Ltd. (Chuetsu grades WH-20A and WH-20AF) of Japan. Cathode 12 can include, for example, from 3% to 9% (e.g., from 4% to 7%) carbon particles by weight. In some embodiment, cathode 12 can include from 4% to 9% (e.g., from 4% to 6.5%) graphite particles by weight.

Another example of a conductive aid is carbon fibers, such as those described in Luo et al., U.S. Patent No. 6,858,349, and in Anglin, U.S. Patent Application Publication No. US 2002/0172867 A1, published on November 21, 2002, and entitled "Battery Cathode". In some embodiments, cathode 12 can include less than 2% by weight (e.g., less than 1.5% by weight, less than 1% by weight, less than 0,75% by weight, less than 0.5% by weight, less than 0.45% by weight, less than 0.4% by weight, less than 0.3% by weight, less than 0.2% by weight), and/or more than 0.1% by weight (e.g., more than 0.2% by weight more than 0.3% by weight, more than 0.4% by weight, more than 0.45% by weight, more than 0.5% by weight, more than 0.75% by weight, more than 1% by weight, more than 1.5% by weight) carbon fibers.

In certain embodiments, cathode 12 can include from 1% by weight to 10% by weight of one or more total conductive aids.

A cathode can be made by coating a cathode material onto a current collector, and drying and then calendering the coated current collector. The cathode material can be prepared by mixing the cathode active material together with other components, such as a binder, solvent/water, and a carbon source. For example, a cathode active material such as MnO₂ may be combined with carbon (e.g., graphite, acetylene black), and mixed with small amount of water to form a cathode slurry. A current collector can then be coated with the cathode slurry to form the cathode.

Examples of binders include polyethylene powders, polyacrylamides, Portland cement and fluorocarbon resins, such as polyvinylidenefluoride (PVDF) and polytetrafluoroethylene (PTFE). An example of a polyethylene binder is sold under the trade name Coathylene HA-1681 (available from Hoechst). Cathode 12 may include, for example, up to 2% binder by weight (e.g., up to 1% binder by weight). In certain embodiments, cathode 12 can include from 0.1% to 2% (e.g., from 0.1% to 1%) binder by weight.

Cathode 12 can include other additives. Additives are disclosed, for example, in Mieczkowska et al., U.S. Patent No. 5,342,712. In some embodiments, cathode 12 can include titanium dioxide (TiO₂). In certain embodiments, cathode 12 can include from 0.1% to 2% (e.g., from 0.2% to 2%) TiO₂ by weight.

Cathodes (e.g., cathode active materials) are described, for example, in Durkot et al., U.S. Patent Application Publication No. US 2004/0237293 A1, published on December 2, 2004, and entitled "Alkaline Cell With Flat Housing and Nickel Oxyhydroxide Cathode"; Durkot et al., U.S. Patent Application Publication No. US 2004/0197656 A1, published on October 7, 2004, and entitled "Alkaline Battery Including Nickel Oxyhydroxide Cathode and Zinc Anode"; Bowden et al., U.S. Patent Application Publication No. US 2004/00768881 A1, published on April 22, 2004, and entitled "Method of Making a Battery"; Eylem et al., U.S. Patent Application Publication No. US 2005/0136328 A1, published on June 23, 2005, and entitled "Battery Cathode"; Christian et al., U.S. Patent Application Publication No. US 2004/0043292 A1, published on March 4,2004, and entitled "Alkaline Battery Including Nickel Oxyhydroxide Cathode and Zinc Anode"; Christian et al., U.S. Patent Application Publication No. US 2004/0202931 A1, published on October 14, 2004, and entitled "Preparation of Nickel Oxyhydroxide"; Eylem et al., U.S. Patent Applicalion Publication No. US 2005/0058903 A1, published on March 17, 2005, and entitled "Primary Alkaline Battery Containing Bismuth Metal Oxide"; Wang et al., U.S. Patent Application Publication No. US 2005/0058902 A1, published on March 17, 2005, and entitled "Primary Alkaline Battery Containing Bismuth Metal Oxide"; and Kelsey et al., U.S. Patent No. 6,207,322.

The electrolyte that is dispersed through cathode 12 (and/or the electrolyte used in the rest of battery 10) can be any of the electrolytes used in batteries. In some embodiments, cathode 12 can include from 5% to 8% (e.g., from 6% to 7%) electrolyte by weight. The electrolyte can be aqueous or non-aqueous. An aqueous electrolyte can be an alkaline solution, such as an aqueous hydroxide solution (e.g., LiOH, NaOH, KOH), or a mixture of hydroxide solutions (e.g., NaOH/KOH). For example, the aqueous hydroxide solution can include from 33% by weight to 40% by weight of the hydroxide material, such as 9N KOH (37% by weight KOH). In some embodiments, the electrolyte can also include up to 4% by weight (e.g., 2% by weight) of zinc oxide.

The electrolyte can include other additives. As an example, the electrolyte can include a soluble material (e.g., an aluminum material) that reduces (e.g., suppresses) the solubility of the cathode active material in the electrolyte. In certain embodiments, the electrolyte can include one or more of the following: aluminum hydroxide, aluminum oxide, alkali metal aluminates, aluminum metal, alkali metal halides, alkali metal carbonates, or mixtures thereof. Electrolyte additives are described, for example, in Eylem et al., U.S. Patent Application Publication No. US 2004/0175613 A1, published on September 9, 2004, and entitled "Battery".

Housing 18 can be any housing commonly used in batteries. As shown, housing 18 is a cylindrical housing. However, housings with other shapes, such as prismatic housings, can be used. In some embodiments, housing 18 can be made of a metal or a metal alloy, such as nickel, nickel-plated steel (e.g., nickel-plated cold-rolled steel), stainless steel, aluminum-clad stainless steel, aluminum, or an aluminum alloy. In certain embodiments, housing 18 can be made of a plastic, such as polyvinyl chloride, polypropylene, a polysulfone, acrylonitrile butadiene styrene (ABS), or a polyamide.

In some embodiments, housing 18 can include an inner metal wall and an outer electrically non-conductive material such as heat-shrinkable plastic. Optionally, a layer of conductive material can be disposed between the inner wall and cathode 12. The layer may be disposed along the inner surface of the inner wall, along the circumference of cathode 12, or both. This conductive layer can be formed, for example, of a carbonaceous material (e.g., graphite). Such materials include, for example, LB1000 (Timcal), Eccocoat 257 (W.R. Grace & Co.), Electrodag 109 (Acheson Colloids Co.), Electrodag 112 (Acheson), Vamiphite 5000 (Nippon), and EB0005 (Acheson). Methods of applying the conductive layer are disclosed, for example, in Canadian Patent No. 1,263,697.

Separator 16 can be formed of any of the standard separator materials used in electrochemical cells (e.g., alkaline cells). For example, separator 16 can be formed of polypropylene (e.g., non-woven polypropylene or microporous polypropylene), polyethylene, polytetrafluoroethylene, a polyamide (e.g., a nylon), a polysulfone, a polyvinyl chloride, or combinations thereof. In some embodiments, separator 16 can include a layer of cellophane combined with a layer of a non-woven material. The non-woven material can include, for example, polyvinyl alcohol and/or rayon.

Seal 22 can be made of, for example, a polymer (e.g., nylon).

Cap 24 can be made of, for example, a metal or a metal alloy, such as aluminum, nickel, titanium, or steel.

In some embodiments, battery 10 can include a hydrogen recombination catalyst to lower the amount of hydrogen gas that may be generated in the cell by anode 14 (e.g., when anode 14 includes zinc). Hydrogen recombination catalysts are described, for example, in Davis et al., U.S. Patent No. 6,500,576, and in Kozawa, U.S. Patent No. 3,893,870. Alternatively or additionally, battery 10 can be constructed to include pressure-activated valves or vents, such as those described in Tomantschger et al., U.S. Patent No. 5,300,371.

Weight percentages of battery components provided herein are determined after the electrolyte solution has been dispersed in the battery.

Battery 10 can be a primary electrochemical cell or a secondary electrochemical cell. Primary cells are meant to be discharged (e.g., to exhaustion) only once, and then discarded. Primary cells are not intended to be recharged. Primary cells are described, for example, in David Linden, Handbook of Batteries (McGraw-Hill, 2d ed. 1995). Secondary electrochemical cells can be recharged for many times (e.g., more than fifty times, more than a hundred times, or more). In some embodiments, secondary cells can include relatively robust separators, such as separators that have many layers and/or separators that are relatively thick. Secondary cells can also be designed to accommodate for changes, such as swelling, that can occur in the cells. Secondary cells are described, for example, in Falk & Salkind, "Alkaline Storage Batteries", John Wiley & Sons, Inc. 1969, and in Virloy et al., U.S. Patent No. 345,124.

Battery 10 can be of any of a number of different voltages (e.g., 1.5 V), and/or can be, for example, a AA, AAA, AAAA, C, or D battery. While battery 10 is cylindrical, in some embodiments, a battery can be non-cylindrical. For example, a battery can be a coin cell, a button cell, a wafer cell, or a racetrack-shaped cell. In some embodiments, a battery can be prismatic. In certain embodiments, a battery can have a rigid laminar cell configuration or a flexible pouch, envelope or bag cell configuration. In some embodiments, a battery can have a spirally wound configuration, or a flat plate configuration. Batteries are described, for example, in Batson et al., U.S. Patent No. 6,001,504; Berkowitz et al., U.S. Patent Application Serial No. 10/675,512, filed on September 30, 2003, and entitled "Batteries"; and Durkot et al., U.S. Patent Application Publication No. US 2004/0237293 A1, published on December 2, 2004, and entitled "Alkaline Cell With Flat Housing and Nickel Oxyhydroxide Cathode".

A cell (e.g., a cylindrical cell) can be prepared by, for example, rolling an anode, separator, and cathode together, and placing them in a housing. The housing (containing the anode, the cathode, and the separator) can then be filled with the electrolytic solution and subsequently hermetically sealed with, for example, a cap and annular insulating gasket.

### Examples

The following examples are intended to be illustrative and not to be limiting.

### Example 1:

Particles having the compositions listed in Table 1 were formed by centrifugal atomization, using a centrifugal atomization apparatus having a configuration similar to that of the centrifugal atomization apparatus shown in FIG. 2. A melt temperature of 550°C was used to form the zinc alloy stream, the cup of the centrifugal atomization apparatus had a rotational velocity of 5400 rpm, and the atomization chamber was maintained in an atmosphere including 1% oxygen.

After they were formed, the particles were tested for gassing using a foil-bag gas test, the results of which also are provided in Table 1. During each foil-bag gas test, 20 grams of a zinc alloy were combined with 20 grams of an electrolyte (35% KOH/ 2% ZnO) in a polyethylene bag. The polyethylene bag was 7.62 cm (3 inches) wide, 10.16 cm (4 inches) long, and 0.0762 mm (3 mils) thick. The polyethylene bag was placed in a heat-sealable aluminum foil bag with interior dimensions of 10.16 cm (4 inches) by 16.51 cm (6.5 inches). The aluminum foil bag was then vacuumed and sealed. The entire system of the two bags was first weighed in water, and then was stored in an oven at 95°C ± 1°C for 24 hours. After being removed from the oven and allowed to cool, the system was again weighed in water to determine the volume of gas produced while the system was in the oven. The units for gassing, µl/gZn-d, represent microliters of gas per gram of zinc per day.

**Table 1- Alloy Compositions & Gassing Results**

| **Sample #** | **In (ppm)** | **Bi (ppm)** | **Al (ppm)** | **Fe (ppm)** | **Pb (ppm)** | **FBG (µl/gZ-d)** |
|---|---|---|---|---|---|---|
| **1** | 65 | 85 | 10 | 1.3 | 19 | 110 |
| **2** | 45 | 80 | 10 | 0.9 | 19 | 89 |
| **3** | 70 | 85 | 20 | 1.5 | 19 | 31 |
| **4** | 70 | 85 | 20 | 1.6 | 19 | 28 |
| **5** | 70 | 76 | 6.7 | 1.5 | 10 | 53 |
| **6** | 68 | 69 | 6 | 1.4 | 9 | 69 |
| **7** | 70 | 72 | 8.5 | 1.5 | 10 | 89 |
| **8** | 70 | 72 | 6.6 | 1.6 | 10 | 60 |

The particle size distributions and volumetric mean diameters (VMD) for the sample 1-4 zinc alloy particles are provided in Table 2 below. Also provided are a particle size distribution and a volumetric mean diameter for the sample 5 zinc alloy particles, which included zinc, 150 ppm indium, and 230 ppm bismuth. The sample 5 zinc alloy particles did not include aluminum. The particle size distribution and volumetric mean diameter (VMD) for each particle sample were measured by low angle laser light scattering, using a Sympatec-HELOS Particle Size Analyzer and a RODOS-VIBRI unit (from Sympatec) for sample dispersion.

**Table 2 - Particle Size Distribution (in Microns)**

| | **Sample 1** | **Sample 2** | **Sample 3** | **Sample 4** | **Sample 5** |
|---|---|---|---|---|---|
| 10^{th} Percentile | 161 | 136 | 140 | 138 | 133 |
| 25^{th} Percentile | 231 | 198 | 198 | 200 | - |
| 50^{th} Percentile | 343 | 304 | 300 | 310 | 270 |
| 75^{th} Percentile | 483 | 460 | 432 | 464 | ---- |
| 90^{th} Percentile | 610 | 641 | 565 | 632 | 597 |
| 100^{th} Percentile | 950 | 1130 | 870 | 1050 | - |
| VMD | 368 | 351 | 329 | 351 | 323 |

### Other Embodiments

While certain embodiments have been described, other embodiments are possible.

As an example, while centrifugal atomization has been described as a process for forming zinc alloy particles, in some embodiments, one or more other processes can be used to form zinc alloy particles. For example, in certain embodiments, a different atomization process, such as gas atomization, can be used to form zinc alloy particles. In a gas atomization process, a molten zinc alloy stream is broken into particles by one or more air jets. Gas atomization is described, for example, in Andrew J. Yule and John J. Dunkley, Atomization of Melts: For Powder Production and Spray Deposition (Clarendon Press, 1994). In some embodiments, a water atomization process can be used to form zinc alloy particles. In a water atomization process, a molten zinc alloy stream is broken into particles by one or more water jets. Water atomization is described, for example, in Andrew J. Yule and John J. Dunkley, Atomization of Melts: For Powder Production and Spray Deposition (Clarendon Press, 1994).

As another example, in certain embodiments, an anode can include zinc fines. The zinc fines can include, for example, an alloy including zinc and indium and/or bismuth. As an example, in certain embodiments, an anode can include zinc fines including an alloy including zinc, 500 ppm indium, and 500 ppm bismuth. Zinc fines are described, for example, in Durkot et al., U.S. Patent No. 6,284,410; Durkot et al., U.S. Patent No. 6,521,378; Durkot et al., U.S. Patent No. 6,472,103; and Durkot et al., U.S. Patent Application Publication No. US 2005/0221181 A1, published on October 6, 2005, and entitled "Electrode Having Modal Distribution of Zinc-Based Particles".

As another example, in some embodiments, a battery can include at least one fusing element. For example, in certain embodiments, a battery can include a fuse. The fuse can, for example, form a part of a current collector in the battery (e.g., an anode current collector). Fuses and fusing elements are described, for example, in Graham et al., U.S. Patent Application Serial No. 60/711,007, filed on August 24, 2005, and entitled "Batteries".

As an additional example, in certain embodiments, a battery can include at least one thermally activated current interrupt mechanism, such as one of the thermally activated current interrupt mechanisms disclosed in Vu et al., U.S. Patent No. 5,750,277.

Other embodiments are in the claims.

## Claims

1. An anode gel comprising 60% to 75% by weight of zinc alloy particles, one or more gelling agents and minor amounts of additives, wherein the alloy particles comprise from 30ppm to 150 ppm indium, from 30 ppm to 150 ppm bismuth, and from 5 ppm to 25 ppm aluminium.

2. The anode of claim 1, wherein at least some of the particles have a diameter of at least 40 microns (1 micron = 1µm)

3. The anode of claim 1, wherein at least some of the parties have a diameter of at most 900 microns.

4. The anode of claim 1, wherein the alloy comprises from 15 ppm to 25 ppm aluminum.

5. The anode of claim 1, wherein the alloy comprises from 60 ppm to 80 ppm indium.

6. The anode of claim 1, wherein the alloy comprises from 75 ppm to 95 ppm bismuth.

7. The anode of claim 1, wherein at least 50% by weight of the particles are spherical, each spherical particle having an aspect ratio of between 1.0 and 2.0, wherein the aspect ratio is equal to the ratio of the longest axis of the particle to the mean perpendicular bisector of the longest axis.

8. The anode of claim 1, wherein the particles comprise an alloy consisting essentially of zinc and from 30 ppm to 150 ppm indium, from 30 ppm to 150 ppm bismuth, and from 5 ppm to 25 ppm aluminum.

9. The anode of claim 1, wherein the alloy is substantially free of mercury.

10. The anode of claim 1. wherein the alloy is substantially free of lead.

11. The anode of claim 1, wherein the alloy is substantially free of iron.

12. The anode of claim 1, wherein the alloy is substantially free of cadmium and/or thallium.

13. A battery, comprising:
a housing;
an anode disposed within the housing;
a cathode disposed within the housing; and
a separator between the anode and the cathode,
wherein the anode is an anode gel according to any one of the preceding claims.

14. A method, comprising:
centrifugally atomizing a molten alloy to provide particles,
wherein the molten alloy comprises zinc and from 30 ppm to 150 ppm indium, from 30 ppm to 150 ppm bismuth, and from 5 ppm to 25 ppm aluminum.

15. The method of claim 14, wherein the molten alloy is centrifugally atomized in an atmosphere including at most 1.2% oxygen.

## Patentansprüche

1. Anodengel, umfassend zu 60 Gew.-% bis 75 Gew.-% Zinklegierungsteilchen, ein oder mehrere Geliermittel und geringe Mengen von Zusatzstoffen, wobei die Legierungsteilchen von 30 ppm bis 150 ppm Indium, von 30 bis 150 ppm Bismut und von 5 ppm bis 25 ppm Aluminium umfassen.

2. Anode nach Anspruch 1, wobei mindestens einige der Teilchen einen Durchmesser von mindestens 40 Mikrometern (1 Mikrometer = 1 µm) aufweisen.

3. Anode nach Anspruch 1, wobei mindestens einige der Teilchen einen Durchmesser von höchstens 900 Mikrometern aufweisen.

4. Anode nach Anspruch 1, wobei die Legierung von 15 ppm bis 25 ppm Aluminium umfasst.

5. Anode nach Anspruch 1, wobei die Legierung von 60 ppm bis 80 ppm Indium umfasst.

6. Anode nach Anspruch 1, wobei die Legierung von 75 ppm bis 95 ppm Bismut fasst.

7. Anode nach Anspruch 1, wobei mindestens 50 Gew.-% der Teilchen kugelförmig sind, jedes kugelförmige Teilchen ein Aspektverhältnis zwischen 1,0 und 2,0 aufweist, wobei das Aspektverhältnis gleich dem Verhältnis der längsten Achse der Teilchen zur mittleren senkrechten Halbierenden der längsten Achse ist.

8. Anode nach Anspruch 1, wobei die Teilchen eine Legierung umfassen, die im Wesentlichen aus Zink und von 30 ppm bis 150 ppm aus Indium, von 30 ppm bis 150 ppm aus Bismut und von 5 ppm bis 25 ppm aus Aluminium besteht.

9. Anode nach Anspruch 1, wobei die Legierung im Wesentlichen frei von Quecksilber ist.

10. Anode nach Anspruch 1, wobei die Legierung im Wesentlichen frei von Blei ist.

11. Anode nach Anspruch 1, wobei die Legierung im Wesentlichen frei von Eisen ist.

12. Anode nach Anspruch 1, wobei die Legierung im Wesentlichen frei von Kadmium und/oder Thallium ist.

13. Batterie, umfassend:
ein Gehäuse;
eine Anode, die innerhalb des Gehäuses angeordnet ist;
eine Kathode, die innerhalb des Gehäuses angeordnet ist; und
einen Separator zwischen der Anode und der Kathode,
wobei die Anode ein Anodengel nach einem der vorstehenden Ansprüche ist.

14. Verfahren, umfassend:
Zerstäuben einer geschmolzenen Legierung durch Zentrifugieren, um Teilchen bereitzustellen,
wobei die geschmolzene Legierung Zink und von 30 ppm bis 15 ppm Indium, von 30 ppm bis 150 ppm Bismut und von 5 ppm bis 25 ppm Aluminium umfasst.

15. Verfahren nach Anspruch 14, wobei die geschmolzene Legierung in einer Atmosphäre, die höchstens 1,2 % Sauerstoff enthält, durch Zentrifugieren zerstäubt wird.

## Revendications

1. Gel d'anode comprenant 60 % à 75 % en poids de particules d'alliage de zinc, un ou plusieurs agents gélifiants et des quantités mineures d'additifs, dans lequel les particules d'alliage comprennent de 30 ppm à 150 ppm d'indium, de 30 ppm à 150 ppm de bismuth, et de 5 ppm à 25 ppm d'aluminium.

2. Anode selon la revendication 1, dans laquelle au moins certaines des particules ont un diamètre d'au moins 40 microns (1 micron = 1 µm).

3. Anode selon la revendication 1, dans laquelle au moins certaines des particules ont un diamètre d'au plus 900 microns.

4. Anode selon la revendication 1, dans laquelle l'alliage comprend de 15 ppm à 25 ppm d'aluminium.

5. Anode selon la revendication 1, dans laquelle l'alliage comprend de 60 ppm à 80 ppm d'indium.

6. Anode selon la revendication 1, dans laquelle l'alliage comprend de 75 ppm à 95 ppm de bismuth.

7. Anode selon la revendication 1, dans laquelle au moins 50 % en poids des particules sont sphériques, chaque particule sphérique ayant un rapport d'aspect compris entre 1,0 et 2,0, dans laquelle le rapport d'aspect est égal au rapport de l'axe le plus long de la particule sur la bissectrice perpendiculaire moyenne de l'axe le plus long.

8. Anode selon la revendication 1, dans laquelle les particules comprennent un alliage constitué sensiblement de zinc et de 30 ppm à 150 ppm d'indium, de 30 ppm à 150 ppm de bismuth, et de 5 ppm à 25 ppm d'aluminium.

9. Anode selon la revendication 1, dans laquelle l'alliage est essentiellement dépourvu de mercure.

10. Anode selon la revendication 1, dans laquelle l'alliage est essentiellement dépourvu de plomb.

11. Anode selon la revendication 1, dans laquelle l'alliage est essentiellement dépourvu de fer.

12. Anode selon la revendication 1, dans laquelle l'alliage est essentiellement dépourvu de cadmium et/ou de thallium.

13. Batterie, comprenant :
un logement;
une anode disposée au sein du logement ;
une cathode disposée au sein du logement ; et
un séparateur entre l'anode et la cathode,
dans laquelle l'anode est un gel d'anode selon l'une quelconque des revendications précédentes.

14. Procède comprenant :
une atomisation centrifuge d'un alliage fondu pour fournir des particules,
dans lequel l'alliage fondu comprend du zinc et de 30 ppm à 150 ppm d'indium, de 30 ppm à 150 ppm de bismuth, et de 5 ppm à 25 ppm d'aluminium.

15. Procédé selon la revendication 14, dans lequel l'alliage fondu subit une atomisation centrifuge dans une atmosphère incluant au plus 1,2 % d'oxygène.
